# EUROPEAN PATENT APPLICATION

(11) **EP 4 708 061 A1**
(43) Date of publication of application: **11.03.2026**
(21) Application number: 25200384.3
(22) Date of filing: 05.09.2025
(51) Int. Cl.: G06F 16/11, G06F 3/06, G06F 9/455

(54) **TECHNIQUE FOR MANAGING MULTIPLE SNAPSHOT STORAGE SERVICE INSTANCES ON-DEMAND**

(30) Priority: 06.09.2024 US 202418826953
(71) Applicant: Nutanix, Inc., San Jose, California 95110 (US)
(72) Inventor: Bezbaruah, Angshuman, Redmond (US); Shrivastava, Brajesh Kumar, Milpitas (US); Gupta, Karan, San Jose (US); Bhattacharyya, Manosiz, San Jose (US)
(74) Representative: Meissner Bolte Partnerschaft mbB

(57) **Abstract**

A technique allows instantiation and running on demand of long-term snapshot storage services of an archival storage system at various geographical locations. Storage service instances are configured to provide storage and retrieval of large amounts of point-in-time images or snapshots (e.g., recovery points) of application workloads stored as objects on one or more buckets of a shared object store. The storage service instances may contemporaneously serve snapshots of a same set of buckets on the shared object store without interfering with each other in a contention-free manner. That is, the technique enables storage service instances that are associated with snapshot workload data and/or metadata stored, e.g., as objects of a recovery point, on the same set of buckets to coexist without knowledge of each other. The storage service instances can be created and destroyed on-demand by splitting and merging the existing instances.

## Description

### BACKGROUND

### Technical Field

The present disclosure relates to archival of data and, more specifically, to efficient indexing of snapshot data in an archival storage system.

### Background Information

File systems are not generally configured to maintain large quantities of snapshots for long-term storage and retention in an object store of an archival storage system because they are primarily designed to rapidly apply changes (e.g., as "live" data) to support immediate access requests. Accordingly, active file systems are often associated with backup/archival storage systems to make snapshot data immediately available for retrieval, e.g., to support critical restore operations. As a result, these systems generally process data indexing/location information together with storage layout and writing data to persistent storage so that recently stored data may be immediately retrieved.

Object stores provided by public clouds and cloud service providers (CSPs) are ubiquitous and may be accessed (shared) from anywhere in the world. Most object stores (e.g., AWS S3, Azure Blob, Nutanix Objects) also provide geographic replication (i.e., replication of data across servers in remote locations), thus making the data available and accessible, e.g., as objects, anywhere in the world. The data may be point-in-time images or recovery points (i.e., snapshots) of application workloads on the object that are stored and retrieved from an object store by a snapshot storage service of an archival storage system that provides storage of large numbers (amounts) of snapshots on the object store. Typically, the snapshot storage service (long-term storage service) assumes exclusive control over snapshot-related metadata (including index data structures configured to provide efficient retrieval of data from the large number of snapshots) in the object store. However, multiple long-term storage services (e.g., running in different parts of the world) accessing the same set of snapshots stored on the same (shared) object store (e.g., without performance robbing locking and contention) may lead to data corruption since each instance of the service would assume control over snapshot data/metadata.

An inadequate solution to this problem may involve hosting a shared storage service in a CSP to allow clients from anywhere in the world to contact an instance of the shared storage service to access snapshots stored in the object store. However, this solution may incur substantial costs due to usage of cloud compute resources, especially when moving data out of a cloud, which usually occurs with a cloud resident service. In addition, the shared storage service is sub-optimal when the service is not co-located with the object store, e.g., in the case of on-premises object stores, where a remote replica of objects is accessed through a cloud resident long-term storage service.

### BRIEF DESCRIPTION OF THE DRAWINGS

The above and further advantages of the embodiments herein may be better understood by referring to the following description in conjunction with the accompanying drawings in which like reference numerals indicate identically or functionally similar elements, of which:
Fig. 1 is a block diagram of a plurality of nodes interconnected as a cluster in a virtualized environment;
Fig. 2 is a block diagram of a virtualization architecture executing on a node to implement the virtualization environment;
Fig. 3 is a block diagram of a controller virtual machine of the virtualization architecture;
Fig. 4 is a block diagram of metadata structures used to map virtual disks (vdisks) of the virtualization architecture;
Figs. 5A-5C are block diagrams of an exemplary mechanism used to create a snapshot of a vdisk;
Fig. 6 is a block diagram of an exemplary data replication environment configured to replicate snapshots for storage to a long-term storage service (LTSS) of an archival storage system;
Fig. 7 is a block diagram of the LTSS of the archival storage system; and
Fig. 8 is a block diagram illustrating an index data structure configured for efficient retrieval of snapshots from the LTSS of the archival storage system;
Fig. 9 is a block diagram of an embodiment of the LTSS as an LTSS instance of the archival storage system;
Fig. 10 is a block diagram illustrating an exemplary multi-instance LTSS (MLTSS) deployment with one or more shared buckets between availability zones;
Fig. 11 is a block diagram illustrating another exemplary MLTSS deployment involving relocation of a portion of a workload during a partial failover;
Fig. 12 block diagram illustrating yet another exemplary MLTSS deployment where an LTSS instance may be instantiated for read-only purposes;
Fig. 13 is a block diagram illustrating an exemplary use of a tag associated with a recovery point (RP) to denote exclusive access in an MLTSS deployment; and
Fig. 14 is a block diagram illustrating an exemplary data object that is shared among RPs for which LTSS ownership is transferred.

### OVERVIEW

The embodiments described herein are directed to a technique configured to allow instantiation (spinning up/deploying) and running (executing) on demand of long-term snapshot storage services of an archival storage system at various geographical locations (e.g., throughout the world). The instantiated storage services (storage service instances) are configured to provide storage and retrieval of large numbers (amounts) of point-in-time images or snapshots (e.g., recovery points) of application workloads stored as objects on one or more buckets of a shared object store. According to the technique, the storage service instances may contemporaneously serve (access) snapshots of a same set of buckets on the shared object store without interfering with (tripping over) each other in a contention-free manner (i.e., without specific communicated synchronization between the storage service instances). That is, the technique enables storage service instances that are associated with (configured to access) snapshot workload data and/or metadata stored, e.g., as objects of a recovery point, on the same set of buckets to coexist without knowledge of (or need to communicate with) each other. The storage service instances can be created and destroyed on-demand by splitting and merging existing instances.

In an embodiment, the long-term storage service instances may be embodied as LTSS instances (cloud agnostic snapshot storage service) configured to execute on one or more computer nodes (on-premises or in cloud) to serve snapshots of recovery points (RPs) stored on the object store. An aspect of the technique is directed to a multi-instance LTSS (MLTSS) deployment that effectively synchronizes operations of multiple LTSS instances through the object store alone to obviate knowledge of or communication among the LTSS instances. Each LTSS instance that creates (or owns) a snapshot object (snapshot) also stamps (marks or records metadata storing the instance ID associated with the object) the snapshot with an identifier (ID) of the LTSS instance, which is illustratively a universally unique ID (UUID). Although snapshots can be accessed and read by any LTSS instance (since they are stored on shared buckets of a shared object store), the ability to manage and perform lifecycle operations (e.g., to perform garbage collection) of each snapshot lies with a respective LTSS owner instance, which allows scaling of garbage collection (GC) by distributing the overall GC load to various instances.

In an embodiment, only a single LTSS instance has ownership (i.e., modification permission) of snapshot-related metadata, e.g., index data structures for providing efficient retrieval of data from the large number of snapshots, needed for garbage collection for one or more of the shared buckets. In this manner, many LTSS instances may access (e.g., read) information of the shared buckets of the storage objects (e.g., retrieve snapshot data using the indexes), but only one LTSS instance at a time (the owner) may modify (e.g., write) the metadata (e.g., index data structures), such as during garbage collection or other administrative functions. In essence, the technique is a multi-reader/single writer deployment using an ownership identifier associated with each RP and associated snapshot (as well as any other construct, such as a virtual disk, storage target and the like) of a storage object to guarantee atomic ownership and guard against corruption. Note that an LTSS instance may own some RPs (with modification or read-write privileges and ability to GC) and not own (i.e., have read only access) other RPs.

In an embodiment, the objects storing the snapshot data and snapshot metadata are classified into two categories: exclusively owned snapshots (objects) and shared objects. Exclusively owned objects include metadata objects, such as RPs, disk configuration, and internal nodes of index data structures, configured to store metadata created by an LTSS instance. Each metadata object is stamped with an ID of the creating LTSS instance as the exclusive owner of the object and, as such, is responsible for performing lifecycle management operations for the object, i.e., GC driven only by the LTSS owner instance. Shared objects, on the other hand, include data objects and leaf nodes of index data structures (configured to provide efficient retrieval of data from the large number of snapshots) that may be shared between snapshots in a snapshot chain. These shared objects are deleted/garbage collected by a GC cycle performed by an LTSS instance owning the last snapshot associated with them, which may be different from the LTSS instance that created the objects.

Illustratively, each LTSS instance may be destroyed (shut down) and re-instantiated (spun up) in the same or different availability zone at the same or different time illustratively in accordance with administratively driven operations or commands. As used herein, an availability zone is a logical boundary for a group of managed computer nodes deployed in one or more geographical locations. An LTSS instance that shuts down and spins up in a different availability zone can easily detect its owned snapshot objects and resume operation on those snapshots. For example, if an "old" LTSS owner instance is permanently shut down or is unavailable, the administrator may run an explicit command to transfer ownership of that instance's snapshot objects to a different, new LTSS owner instance. In an embodiment, transfer of ownership of snapshot objects may be implemented by (i) examining the snapshot objects in the object store, (ii) identifying the objects stamped (marked) with the old LTSS owner instance ID, and (iii) re-stamping those objects with the new LTSS owner instance ID (i.e., modifying metadata storing the instance ID associated with the object) to complete the ownership transfer procedure.

Advantageously, the technique described herein allows instantiation (creation) and/or destruction of an LTSS instance on demand at any time and at any availability zone (at any geographical location). Moreover, an LTSS instance can be destroyed and dynamically created later at the same or different availability zone (AZ). For example, a primary workload served by one or more primary LTSS instances executing on an on-premises group of nodes (cluster) may run from different AZs that may be located in different geographical locations. The technique allows such disparate AZ instances to share snapshots using shared buckets stored in a common, shared object store without further communication or synchronization (each shared object has a corresponding instance of the disparate AZ instances having ownership for managing GC). Similarly, if a portion of the workload is partially moved to a different AZ, a new secondary LTSS instance can continue serving the moved workload to archive snapshots to the shared object store, wherein the original AZ retains ownership of the shared object for GC. The two LTSS instances can continue sharing snapshots and leveraging each other's referenced snapshots for delta replication.

In addition, a remote LTSS instance may be created (spun up) in a remote location (disaster recovery site) and its snapshot workload may be filled (hydrated) to a nearer geographic location of the object store in anticipation of a failover to that site. This aspect of the technique reduces the recovery time objective (RTO) by providing "on-demand speedy recovery" with a ready-made snapshot store available at the remote disaster recovery (DR) site. Such on-demand recovery reduces latency and improves throughput and RTO by moving an archival solution closer (geographically nearer) to the workload.

Furthermore, dynamically created LTSS instances may include read-write privileges (e.g., for regular replication snapshot targets) or read-only privileges (e.g., for snapshots readers). As for the latter, there are many use cases such as, e.g., reporting, stats collection, and passive analytics of LTSS instances that require just read-only privileges. Here, read-only LTSS instances can be spun up dynamically as needed since they do not have ownership of the shared object (for GC) and only access object data or related information (e.g., diagnostics, analytics, stats collection and the like) using reads.

### DESCRIPTION

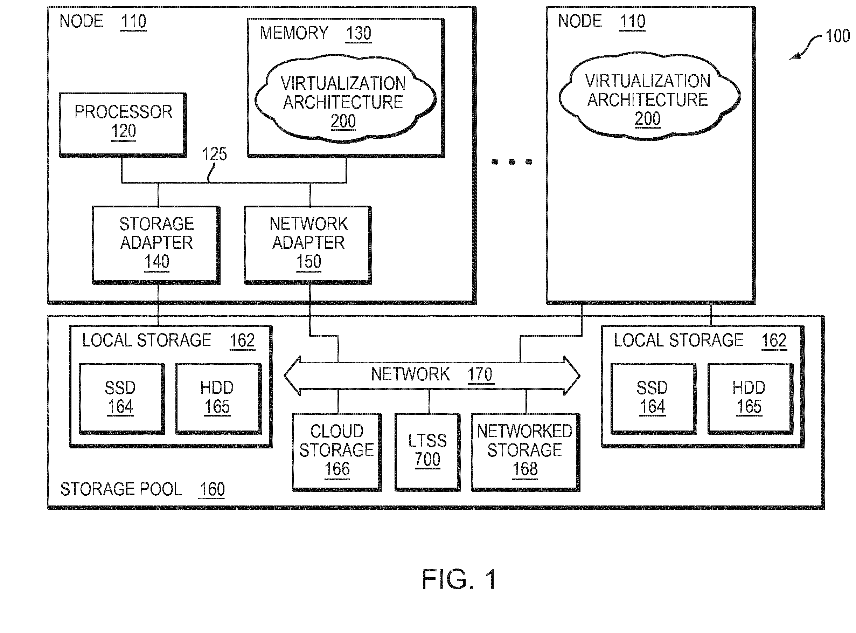

Fig. 1 is a block diagram of a plurality of nodes 110 interconnected as a logical group or cluster 100 and configured to provide compute and storage services for information, i.e., data and metadata, stored on storage devices of a virtualization environment. Each node 110 is illustratively embodied as a physical computer system (computer node) having hardware resources, such as one or more processors 120, main memory 130, one or more storage adapters 140, and one or more network adapters 150 coupled by an interconnect, such as a system bus 125. The storage adapter 140 may be configured to access information stored on storage devices, such as solid-state drives (SSDs) 164 and magnetic hard disk drives (HDDs) 165, which are organized as local storage 162 and virtualized within multiple tiers of storage as a unified storage pool 160, referred to as scale-out converged storage (SOCS) accessible cluster-wide. To that end, the storage adapter 140 may include input/output (I/O) interface circuitry that couples to the storage devices over an I/O interconnect arrangement, such as a conventional peripheral component interconnect (PCI) or serial ATA (SATA) topology.

The network adapter 150 connects the node 110 to other nodes 110 of the cluster 100 over network 170, which is illustratively an Ethernet local area network (LAN). The network adapter 150 may thus be embodied as a network interface card having the mechanical, electrical and signaling circuitry needed to connect the node 110 to the network 170. The multiple tiers of SOCS include storage that is accessible through the network 170, such as cloud storage 166 and/or networked storage 168, as well as the local storage 162 within or directly attached to the node 110 and managed as part of the storage pool 160 of storage objects, such as files and/or logical units (LUNs). The cloud and/or networked storage may be embodied as network attached storage (NAS) or storage area network (SAN) and include combinations of storage devices (e.g., SSDs and/or HDDs) from the storage pool 160. As described herein, a long-term storage service (LTSS 700) of an archival storage system provides storage of large numbers (amounts) of point-in-time images or recovery points (i.e., snapshots) of application workloads on an object store. Communication over the network 170 may be affected by exchanging discrete frames or packets of data according to protocols, such as the Transmission Control Protocol/Internet Protocol (TCP/IP) and the OpenID Connect (OIDC) protocol, although other protocols, such as the User Datagram Protocol (UDP) and the HyperText Transfer Protocol Secure (HTTPS), as well as specialized application program interfaces (APIs) may also be advantageously employed.

The main memory 120 includes a plurality of memory locations addressable by the processor 120 and/or adapters for storing software code (e.g., processes and/or services) and data structures associated with the embodiments described herein. The processor and adapters may, in turn, include processing elements and/or circuitry configured to execute the software code, such as virtualization software of virtualization architecture 200, and manipulate the data structures. As described herein, the virtualization architecture 200 enables each node 110 to execute (run) one or more virtual machines that write data to the unified storage pool 160 as if they were writing to a SAN. The virtualization environment provided by the virtualization architecture 200 relocates data closer to the virtual machines consuming the data by storing the data locally on the local storage 162 of the cluster 100 (if desired), resulting in higher performance at a lower cost. The virtualization environment can horizontally scale from a few nodes 110 to a large number of nodes, enabling organizations to scale their infrastructure as their needs grow.

It will be apparent to those skilled in the art that other types of processing elements and memory, including various computer-readable media, may be used to store and execute program instructions pertaining to the embodiments described herein. Also, while the embodiments herein are described in terms of software code, processes, and computer (e.g., application) programs stored in memory, alternative embodiments also include the code, processes and programs being embodied as logic, components, and/or modules consisting of hardware, software, firmware, or combinations thereof.

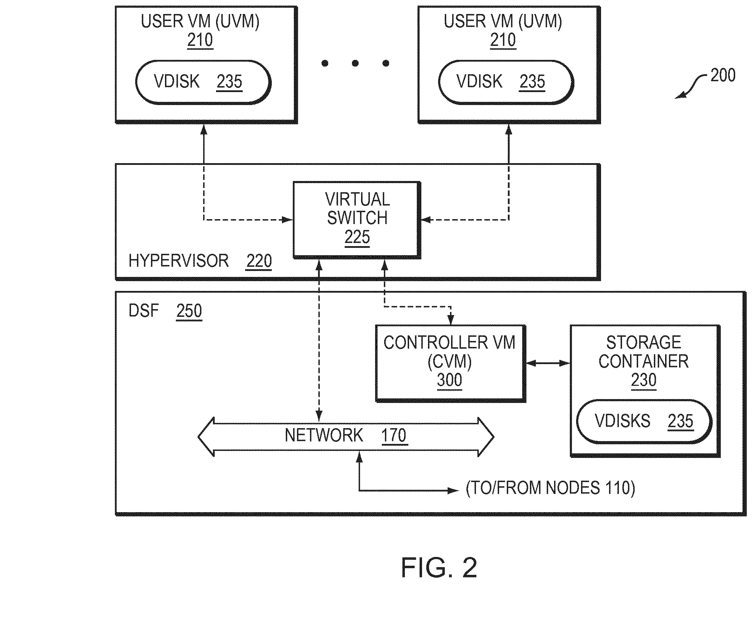

Fig 2 is a block diagram of a virtualization architecture 200 executing on a node to implement the virtualization environment. Each node 110 of the cluster 100 includes software components that interact and cooperate with the hardware resources to implement virtualization. The software components include a hypervisor 220, which is a virtualization platform configured to mask low-level hardware operations from one or more guest operating systems executing in one or more user virtual machines (UVMs) 210 that run client software. The hypervisor 220 allocates the hardware resources dynamically and transparently to manage interactions between the underlying hardware and the UVMs 210. In an embodiment, the hypervisor 220 is illustratively the Nutanix Acropolis Hypervisor (AHV), although other types of hypervisors, such as the Xen hypervisor, Microsoft's Hyper-V, RedHat's KVM, and/or VMware's ESXi, may be used in accordance with the embodiments described herein.

Another software component running on each node 110 is a special virtual machine, called a controller virtual machine (CVM) 300, which functions as a virtual controller for SOCS. The CVMs 300 on the nodes 110 of the cluster 100 interact and cooperate to form a distributed system that manages all storage resources in the cluster. Illustratively, the CVMs and storage resources that they manage provide an abstraction of a distributed storage fabric (DSF) 250 that scales with the number of nodes 110 in the cluster 100 to provide cluster-wide distributed storage of data and access to the storage resources with data redundancy across the cluster. That is, unlike traditional NAS/SAN solutions that are limited to a small number of fixed controllers, the virtualization architecture 200 continues to scale as more nodes are added with data distributed across the storage resources of the cluster. As such, the cluster operates as a hyperconvergence architecture wherein the nodes provide both storage and computational resources available cluster wide.

The client software (e.g., applications) running in the UVMs 210 may access the DSF 250 using filesystem protocols, such as the network file system (NFS) protocol, the common internet file system (CIFS) protocol and the internet small computer system interface (iSCSI) protocol. Operations on these filesystem protocols are interposed at the hypervisor 220 and redirected (via virtual switch 225) to the CVM 300, which exports one or more iSCSI, CIFS, or NFS targets organized from the storage objects in the storage pool 160 of DSF 250 to appear as disks to the UVMs 210. These targets are virtualized, e.g., by software running on the CVMs, and exported as virtual disks (vdisks) 235 to the UVMs 210. In some embodiments, the vdisk is exposed via iSCSI, CIFS or NFS and is mounted as a virtual disk on the UVM 210. User data (including the guest operating systems) in the UVMs 210 reside on the vdisks 235 and operations on the vdisks are mapped to physical storage devices (SSDs and/or HDDs) located in DSF 250 of the cluster 100.

In an embodiment, the virtual switch 225 may be employed to enable I/O accesses from a UVM 210 to a storage device via a CVM 300 on the same or different node 110. The UVM 210 may issue the I/O accesses as a SCSI protocol request to the storage device. Illustratively, the hypervisor 220 intercepts the SCSI request and converts it to an iSCSI, CIFS, or NFS request as part of its hardware emulation layer. As previously noted, a virtual SCSI disk attached to the UVM 210 may be embodied as either an iSCSI LUN or a file served by an NFS or CIFS server. An iSCSI initiator, SMB/CIFS or NFS client software may be employed to convert the SCSI-formatted UVM request into an appropriate iSCSI, CIFS or NFS formatted request that can be processed by the CVM 300. As used herein, the terms iSCSI, CIFS and NFS may be interchangeably used to refer to an IP-based storage protocol used to communicate between the hypervisor 220 and the CVM 300. This approach obviates the need to individually reconfigure the software executing in the UVMs to directly operate with the IP-based storage protocol as the IP-based storage is transparently provided to the UVM.

For example, the IP-based storage protocol request may designate an IP address of a CVM 300 from which the UVM 210 desires I/O services. The IP-based storage protocol request may be sent from the UVM 210 to the virtual switch 225 within the hypervisor 220 configured to forward the request to a destination for servicing the request. If the request is intended to be processed by the CVM 300 within the same node as the UVM 210, then the IP-based storage protocol request is internally forwarded within the node to the CVM. The CVM 300 is configured and structured to properly interpret and process that request. Notably, the IP-based storage protocol request packets may remain in the node 110 when the communication-the request and the response-begins and ends within the hypervisor 220. In other embodiments, the IP-based storage protocol request may be routed by the virtual switch 225 to a CVM 300 on another node of the cluster 100 for processing. Specifically, the IP-based storage protocol request is forwarded by the virtual switch 225 to a physical switch (not shown) for transmission over network 170 to the other node. The virtual switch 225 within the hypervisor 220 on the other node then forwards the request to the CVM 300 on that node for further processing.

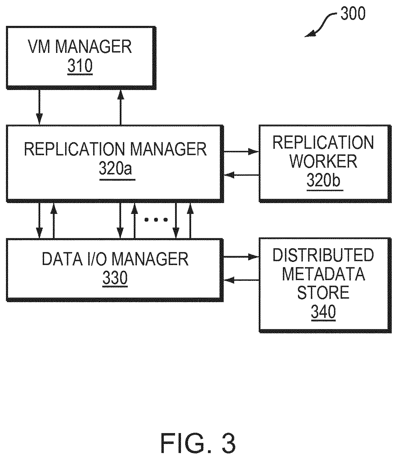

Fig. 3 is a block diagram of the controller virtual machine (CVM) 300 of the virtualization architecture 200. In one or more embodiments, the CVM 300 runs an operating system (e.g., the Acropolis operating system) that is a variant of the Linux^{®} operating system, although other operating systems may also be used in accordance with the embodiments described herein. The CVM 300 functions as a distributed storage controller to manage storage and I/O activities within DSF 250 of the cluster 100. Illustratively, the CVM 300 runs as a virtual machine above the hypervisor 220 on each node and cooperates with other CVMs in the cluster to form the distributed system that manages the storage resources of the cluster, including the local storage 162, the networked storage 168, and the cloud storage 166. Since the CVMs run as virtual machines above the hypervisors and, thus, can be used in conjunction with any hypervisor from any virtualization vendor, the virtualization architecture 200 can be used and implemented within any virtual machine architecture, allowing the CVM to be hypervisor agnostic. The CVM 300 may therefore be used in a variety of different operating environments due to the broad interoperability of the industry standard IP-based storage protocols (e.g., iSCSI, CIFS, and NFS) supported by the CVM.

Illustratively, the CVM 300 includes a plurality of processes embodied as a storage stack running in a user space of the operating system of the CVM to provide storage and I/O management services within DSF 250. The processes include a virtual machine (VM) manager 310 configured to manage creation, deletion, addition and removal of virtual machines (such as UVMs 210) on a node 110 of the cluster 100. For example, if a UVM fails or crashes, the VM manager 310 may spawn another UVM 210 on the node. A replication manager 320a is configured to provide replication and disaster recovery capabilities of DSF 250. Such capabilities include migration/failover of virtual machines and containers, as well as scheduling of snapshots. In an embodiment, the replication manager 320a may interact with one or more replication workers 320b. A data I/O manager 330 is responsible for all data management and I/O operations in DSF 250 and provides a main interface to/from the hypervisor 220, e.g., via the IP-based storage protocols. Illustratively, the data I/O manager 330 presents a vdisk 235 to the UVM 210 in order to service I/O access requests by the UVM to the DFS. A distributed metadata store 340 stores and manages all metadata in the node/cluster, including metadata structures that store metadata used to locate (map) the actual content of vdisks on the storage devices of the cluster.

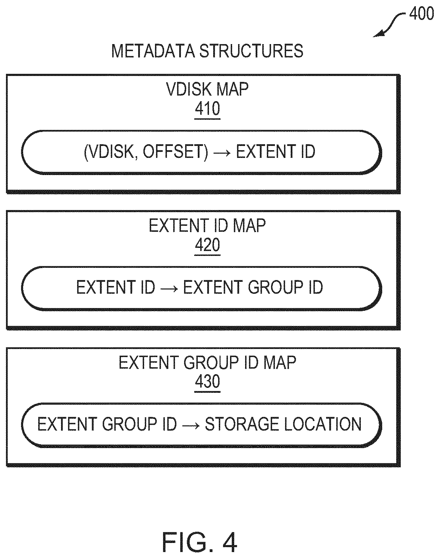

Fig. 4 is a block diagram of metadata structures 400 used to map virtual disks of the virtualization architecture. Each vdisk 235 corresponds to a virtual address space for storage exposed as a disk to the UVMs 210. Illustratively, the address space is divided into equal sized units called virtual blocks (vblocks). A vblock is a chunk of predetermined storage, e.g., 1MB, corresponding to a virtual address space of the vdisk that is used as the basis of metadata block map structures described herein. The data in each vblock is physically stored on a storage device in units called extents. Extents may be written/read/modified on a sub-extent basis (called a slice) for granularity and efficiency. A plurality of extents may be grouped together in a unit called an extent group. Each extent and extent group may be assigned a unique identifier (ID), referred to as an extent ID and extent group ID, respectively. An extent group is a unit of physical allocation that is stored as a file on the storage devices.

Illustratively, a first metadata structure embodied as a vdisk map 410 is used to logically map the vdisk address space for stored extents. Given a specified vdisk and offset, the logical vdisk map 410 may be used to identify a corresponding extent (represented by extent ID). A second metadata structure embodied as an extent ID map 420 is used to logically map an extent to an extent group. Given a specified extent ID, the logical extent ID map 420 may be used to identify a corresponding extent group containing the extent. A third metadata structure embodied as an extent group ID map 430 is used to map a specific physical storage location for the extent group. Given a specified extent group ID, the physical extent group ID map 430 may be used to identify information corresponding to the physical location of the extent group on the storage devices such as, for example, (1) an identifier of a storage device that stores the extent group, (2) a list of extent IDs corresponding to extents in that extent group, and (3) information about the extents, such as reference counts, checksums, and offset locations.

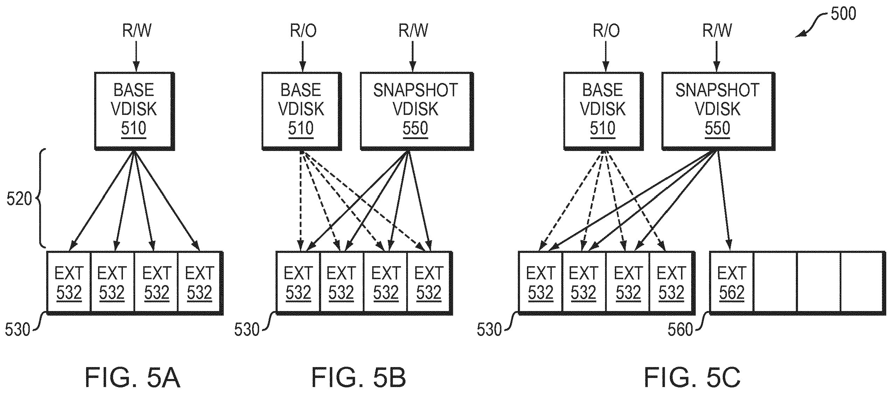

In an embodiment, CVM 300 and DSF 250 cooperate to provide support for snapshots, which are point-in-time copies of storage objects, such as files, LUNs and/or vdisks. Figs. 5A-5C are block diagrams of an exemplary mechanism 500 used to create a snapshot of a virtual disk. Illustratively, the snapshot may be created by leveraging an efficient low overhead snapshot mechanism, such as the redirect-on-write algorithm. As shown in Fig. 5A, the vdisk (base vdisk 510) is originally marked read/write (R/W) and has an associated block map 520, i.e., a metadata mapping with pointers that reference (point to) the extents 532 of an extent group 530 storing data of the vdisk on storage devices of DSF 250. Advantageously, associating a block map with a vdisk obviates traversal of a snapshot chain, as well as corresponding overhead (e.g., read latency) and performance impact.

To create the snapshot (Fig. 5B), another vdisk (snapshot vdisk 550) is created by sharing the block map 520 with the base vdisk 510. This feature of the low overhead snapshot mechanism enables creation of the snapshot vdisk 550 without the need to immediately copy the contents of the base vdisk 510. Notably, the snapshot mechanism uses redirect-on-write such that, from the UVM perspective, I/O accesses to the vdisk are redirected to the snapshot vdisk 550 which now becomes the (live) vdisk and the base vdisk 510 becomes the point-in-time copy, i.e., an "immutable snapshot," of the vdisk data. The base vdisk 510 is then marked immutable, e.g., read-only (R/O), and the snapshot vdisk 550 is marked as mutable, e.g., read/write (R/W), to accommodate new writes and copying of data from the base vdisk to the snapshot vdisk. In an embodiment, the contents of the snapshot vdisk 550 may be populated at a later time using, e.g., a lazy copy procedure in which the contents of the base vdisk 510 are copied to the snapshot vdisk 550 over time. The lazy copy procedure may configure DSF 250 to wait until a period of light resource usage or activity to perform copying of existing data in the base vdisk. Note that each vdisk includes its own metadata structures 400 used to identify and locate extents owned by the vdisk.

Another procedure that may be employed to populate the snapshot vdisk 550 waits until there is a request to write (i.e., modify) data in the snapshot vdisk 550. Depending upon the type of requested write operation performed on the data, there may or may not be a need to perform copying of the existing data from the base vdisk 510 to the snapshot vdisk 550. For example, the requested write operation may completely or substantially overwrite the contents of a vblock in the snapshot vdisk 550 with new data. Since the existing data of the corresponding vblock in the base vdisk 510 will be overwritten, no copying of that existing data is needed and the new data may be written to the snapshot vdisk at an unoccupied location on the DSF storage (Fig. 5C). Here, the block map 520 of the snapshot vdisk 550 directly references a new extent 562 of a new extent group 560 storing the new data on storage devices of DSF 250. However, if the requested write operation only overwrites a small portion of the existing data in the base vdisk 510, the contents of the corresponding vblock in the base vdisk may be copied to the snapshot vdisk 550 and the new data of the write operation may be written to the snapshot vdisk to modify that portion of the copied vblock. A combination of these procedures may be employed to populate the data content of the snapshot vdisk.

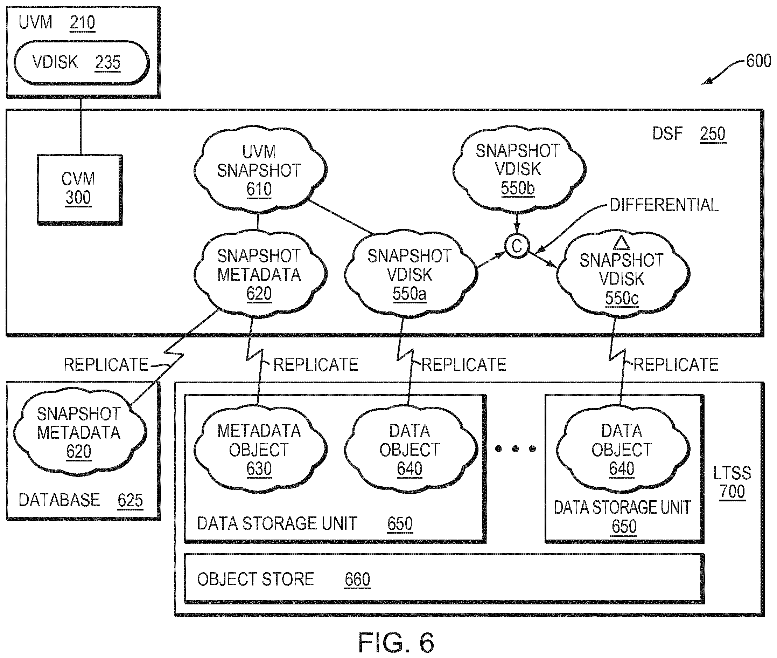

The embodiments described herein are related to an indexing technique configured to provide an index data structure for efficient retrieval of data of a snapshot from the LTSS of the archival storage system. Fig. 6 is a block diagram of an exemplary data replication environment 600 configured to replicate snapshots for storage to the LTSS of the archival storage system. The architecture of LTSS 700 is configured to process large amounts of point-in-time images or recovery points (i.e., snapshots) of application workloads for storage on an object store 660 (archival storage vendor such as Amazon AWS S3 storage services, Google Cloud Storage, Microsoft Azure Cloud Storage and the like), wherein the workloads are characterized by a logical entity having typed data, e.g., a virtual machine (VM) such as a UVM 210. A client of LTSS 700 may be a distributed file system of a storage system (e.g., CVM 300 of DSF 250) that generates snapshots of the UVM (e.g., data processed by an application running in the UVM) and replicates the UVM snapshot 610 for storage in the object store 660. Replication, in this context, is directed to storage devices that exhibit incremental, block-level changes. LTSS 700 is thus a "generic" long-term storage service of an archival/backup storage system from the perspective of the client, i.e., the client flushes (delivers) data blocks of UVM snapshots 610 to the LTSS 700, which organizes the blocks for long-term storage in the object store 660. Each UVM snapshot 610 is generally handled as a data storage unit 650 by LTSS 700.

Illustratively, the content of each UVM snapshot 610 includes snapshot metadata and snapshot data, wherein the snapshot metadata 620 is essentially configuration information describing the logical entity (e.g., UVM 210) in terms of, e.g., virtual processor, memory, network and storage device resources of the UVM. The snapshot metadata 620 of the UVM 210 is illustratively replicated for storage in a query-able database 625 although, in an embodiment, the snapshot metadata 620 may be further replicated and organized as a metadata object 630 within a configuration namespace (e.g., bucket) of the object store 660 of LTSS 700 for long-term durability and availability. The data of the UVM 210 is virtualized as a disk (e.g., vdisk 235) and, upon generation of a snapshot, is processed as snapshot vdisk 550 of the UVM 210. The snapshot vdisk 550 is replicated, organized and arranged as one or more data objects 640 of the data storage unit 650 for storage in the object store 660. Each extent 532 of the snapshot vdisk 550 is a contiguous range of address space of a data object 640, wherein data blocks of the extents are "packed" into the data object 640 and accessible by, e.g., offsets and lengths. Note that a preferred size (e.g., 16 MB) of each data object 640 may be specified by the object store/vendor (e.g., AWS S3 cloud storage) for optimal use of the object store/vendor.

Operationally, the client initially generates a full snapshot of vdisk 235 (e.g., snapshot vdisk 550a) and transmits copies (i.e., replicas) of its data blocks to effectively replicate the snapshot vdisk 550a to LTSS 700. The snapshot vdisk 550a is thereafter used as a reference snapshot for comparison with one or more subsequent snapshots of the vdisk 235 (e.g., snapshot vdisk 550b) when computing incremental differences (deltas Δs). The client (e.g., CVM 300) generates the subsequent vdisk snapshots 550b at predetermined (periodic) time intervals and computes the deltas of these periodically generated snapshots with respect to the reference snapshot. The CVM 300 transmits replicas of data blocks of these deltas (delta replication) as Δ snapshot vdisk 550c to LTSS. From the perspective of the CVM 300, the LTSS 700 is a storage entity having an address on the network 170 (or WAN), similar to any networked storage 168. However, unlike networked storage 168, which is generally exposed to (accessed by) the CVM 300 using filesystem protocols such as NFS, CIFS and iSCSI, the LTSS 700 is accessed using specialized application program interfaces (APIs) referred to herein as replication APIs, which have rich descriptive semantics. For example, a replication API may specify the snapshotted vdisk 550a of the logical entity (e.g., UVM 210) as well as information describing the snapshot metadata 620 and snapshot vdisk 550a of the entity. The CVM 300 then transmits (replicates) a stream of data blocks of the snapshotted vdisk 550a to LTSS 700.

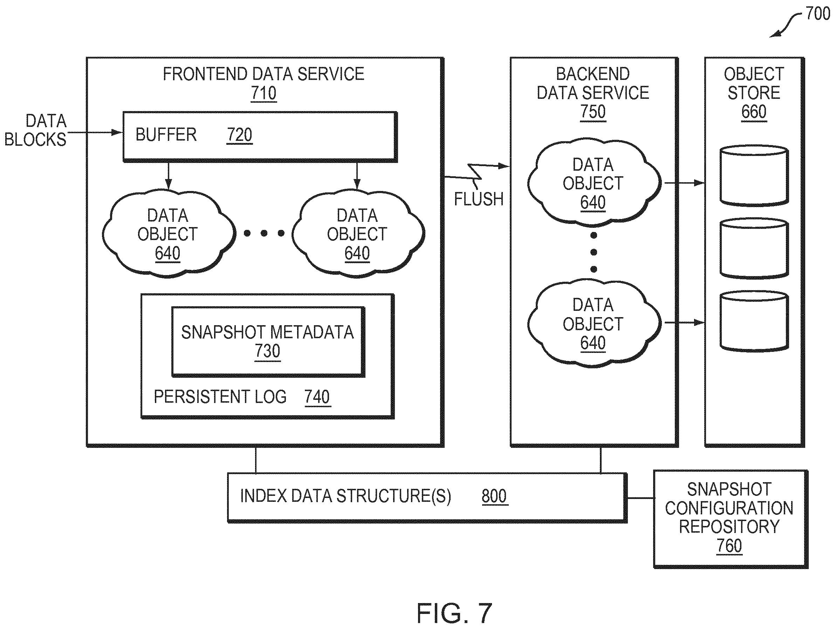

Fig. 7 is a block diagram of the LTSS 700 of the archival storage system. Illustratively, the LTSS 700 includes two data services (processes): a frontend data service 710 that cooperates with the client (e.g., CVM 300) to organize large amounts of the replicated snapshot data (data blocks) into data objects 640 and a backend data service 750 that provides an interface for storing the data objects 640 in the object store 660. In an embodiment, the LTSS data services/processes may execute on a computing platform at any location and is generally "stateless" as all data/metadata are stored on the object store 660. Accordingly, the frontend data service 710 and backend data service 750 may run either locally on a node of an "on-prem" cluster or remotely on a node of an "in-cloud" cluster. In response to receiving an initial replication API directed to the snapshot vdisk 550a, the frontend data service 710 temporarily stores the stream of data blocks of the snapshot vdisk 550a, e.g., in a buffer 720 and writes the data blocks into one or more extents (i.e., contiguous, non-overlapping, variable-length regions of the vdisk) for storage in data objects 640 of a preferred size (e.g., 16MB) as specified by the object store vendor for optimal use. The frontend data service 710 then forwards (flushes) the data objects 640 to the backend data service 750 for storage in the object store 660 (e.g., AWS S3). In response to receiving a subsequent replication API directed to the Δ snapshot vdisk 550c, the frontend data service temporarily stores the stream of data blocks of the Δ snapshot vdisk 550c in buffer 720, writes those data blocks to one or more data objects 640, and flushes the objects to the backend data service 750.

Prior to flushing the data objects 640 to the backend data service 750, the frontend data service 710 creates metadata that keeps track of the amount of data blocks received from the CVM 300 for each replicated snapshot, e.g., snapshot vdisk 550a as well as Δ snapshot vdisk 550c. The metadata associated with the snapshot (i.e., snapshot metadata 730) is recorded as an entry in persistent storage media (e.g., a persistent log 740) local to the frontend data service 710. The snapshot metadata 730 includes information describing the snapshot data, e.g., a logical offset range of the snapshot vdisk 550. In an embodiment, the snapshot metadata 730 is stored as an entry of the persistent log 740 in a format such as, e.g., snapshot ID, logical offset range of snapshot data, logical offset into the data object to support storing multiple extents into a data object, and data object ID. The frontend data service 710 updates the snapshot metadata 730 of the log entry for each data object 640 flushed to the backend data service 750. Notably, the snapshot metadata 730 is used to construct the index data structure 800 of LTSS.

Illustratively, the index data structure 800 is configured to enable efficient identification (location) and retrieval of data blocks contained within numerous data objects 640 (snapshots) stored on the object store 660. Effectively, the index data structure acts as an independent database organized to retrieve data by extent of a vdisk (as recorded in the associated object store of the archival storage system) according to any snapshot. Notably, each snapshot is associated with a corresponding index data structure and may include incremental changes to a prior snapshot that may reference a prior index data structure associated with the prior snapshot. In this manner, only the incremental changes between snapshots need be stored in the archival storage system as indicated above, because later index data structures may reference (via prior index data structures) older blocks in prior snapshots.

Accordingly, the index data structure 800 may be extended to embody a plurality of "cloned," e.g., copy-on-write, index structures associated with many of the data objects 640 of LTSS 700 to enable the location and retrieval of the data blocks. To that end, a snapshot configuration repository 760 (e.g., database) is provided, e.g., on storage media local to the LTSS data services, that is dynamically query-able by the data services to select a snapshot (i.e., the repository is organized according to snapshot) and its corresponding index data structure 800 of a data object, e.g., from among the numerous (cloned) index data structures. The repository 760 may also be stored on the object store 660 to ensure fault tolerance, durability and availability.

In an embodiment, the snapshot configuration repository 760 is organized as a key-value store that provides a higher-level of indexing (i.e., higher than the actual index data structure) to resolve to a snapshot corresponding to a (cloned) index data structure used to retrieve one or more data blocks for data objects stored in the object store 660. The snapshot configuration repository 760 is managed separately from the object store (e.g., remote from the object store media) and points to roots of the cloned index structures associated with snapshot data objects (e.g., using a remote referencing mechanism such as a URL to a root node of a cloned index structure resident on object store media located on the network/internet.) Such remote referencing enables essentially infinite storage capacity of the LTSS object store, e.g., among various cloud service providers (CSPs) such as AWS, Google, Azure and the like, that is not limited by an address space (file space, namespace) of a (client) distributed file system. Note that the limited address space of such client file systems also limits the amount of "active" file system snapshots that can be maintained on the client's storage (such as a volume).

In an embodiment, the snapshot configuration repository 760 may be used as a search engine to enable efficient locating and retrieving of a data block from the selected object. Similar to the persistent log 740, the snapshot configuration repository 760 includes configuration information about each snapshot and associated data object as well as pointers to the roots of the index data structures for the data objects. The repository 760 may also be indexed by time stamp or VM/vdisk name of a snapshot. The snapshot may then be selected and a pointer to a root node of the corresponding index data structure 800 may be identified to access a specified logical offset range of a snapshot. Notably, the index data structure 800 is configured to translate the logical offset range (address space) of data in the snapshot to the data object address space of the object store hosting the snapshot data to thereby enable efficient (i.e., bounded time) retrieval of the snapshot data from the object store independent of the number of snapshots.

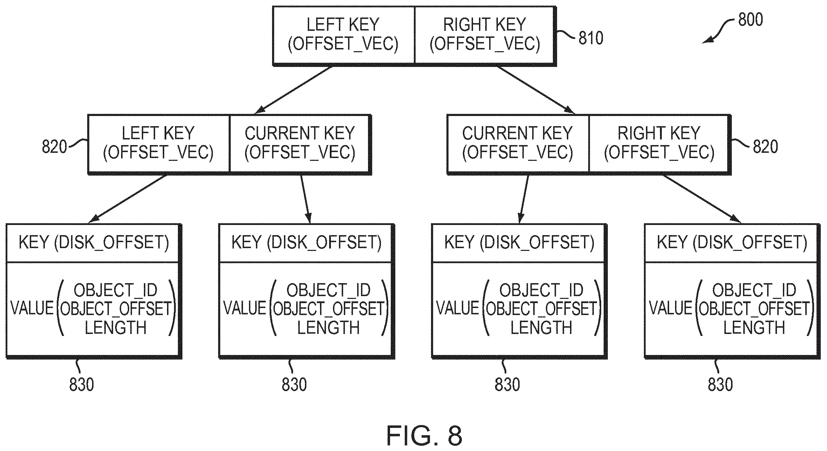

Fig. 8 is a block diagram illustrating the index data structure 800 configured for efficient retrieval of snapshots from the LTSS of the archival storage system. In one or more embodiments, the index data structure 800 is illustratively a balanced tree (e.g., a B+ tree) with a large branching factor for internal nodes to maintain a limited depth of the tree, although other types of data structures, such as heaps and hashes, may be used with the embodiments described herein. When embodied as the B+ tree, the index data structure includes a root node 810, one or more intermediate (internal) nodes 820 and a plurality of leaf nodes 830. For the reference snapshot vdisk 550a, each internal node 820 contains a set of keys that specify logical offset ranges into the address space of the vdisk 550a and corresponding values that reference other nodes in the B+ tree (e.g., lower level internal nodes or leaf nodes). Each leaf node 830 contains a value describing (pointing to) a data object having the extent that includes the selected data blocks corresponding to the specified logical offset range as well as a logical offset of the extent in the data object and length of the extent. In other words, a leaf node can be considered as a 4-tuple having: (i) a logical offset in the address space of the logical entity (e.g., snapshot), (ii) a data object id, (iii) a logical offset of the extent into the data object, and (iv) a length of the extent. The technique only requires traversing the depth of a (cloned) index data structure to find the leaf node 830 pointing to a selected data block of a particular snapshot (data object). Notably, a large branching factor (e.g., 1024) for internal nodes permits a very large number of references in the internal nodes 820 of the B+ tree so that a depth of the tree is reduced (e.g., to 2 or 3 levels) enabling an effective bounded traversal time from the root node to a leaf node (e.g., traverse at most 3 nodes to locate data in the object store). The address space covered by the leaf nodes is of variable length and depends upon a number of extents referenced according to the branching factor. In an embodiment, the internal nodes have a branching factor much larger than the leaf nodes to support a very large address space (e.g., given an extent size of less than 1MB and a branching factor of 32K, a two-level B-tree can reference an address space as great as 16 exabytes).

In an embodiment, each internal node 820 contains keys and pointers to children nodes, and generally not any values. The root node 810 is a variant of the internal node 820 but, similar to the internal node, contains disk offsets as keys. For each key, a left pointer points to data of the vdisk ranging from a left key to (and including) a current key; illustratively, data in a "child" internal node 820 for the left pointer embodies the form [left key, current key]. A right pointer points to data of the vdisk ranging from the current key to (but excluding) a right key; illustratively, data in a child internal node for the right pointer embodies the form [current key, right key]. The fields of the internal node illustratively include (i) Offset_Vec containing a list of offsets in the vdisk that function as a key; and (ii) Child_Pointer_Vec containing a pointer to a child node. The leaf node 830 contains a predetermined number of descriptors (e.g., up to 1024), each of which describes the vdisk address space covered by the descriptor and the location of the corresponding data in the form of the following keys and values:
Key (Disk_Offset) -> Value (Object_ID, Object_Logical_Offset, Length) wherein Disk_Offset refers to the offset within the vdisk; Object_ID identifies the data object in the archival storage system and may be a combination of a vdisk uuid and an assigned predefined (int64) number; Object_Logical_Offset is the logical offset with the object (specified by Object_ID) at which the data resides; and Length is the number of contiguous bytes (size of the extent) beginning at "Offset" (Disk_Offset) that is pointed to by the key entry.

Referring to Fig. 6, assume the CVM 300 generates the reference snapshot as snapshot vdisk 550a for vdisk 235 and having a size of 1TB with an assigned a vdisk ID of, e.g., 1. The CVM 300 replicates the data blocks of the snapshot vdisk 550a to the LTSS 700 in accordance with a first replication API call that identifies the vdisk ID 1 and the snapshot vdisk 550a as, e.g., snapshot ID 1. In response to receiving the first replication API call, the frontend data service 710 "buffers" the changed data blocks to an optimal size (e.g., 16MB) and writes the blocks into a plurality of ("n") data objects 640 assigned, e.g., data object IDs 1-n. The frontend data service 710 also records snapshot metadata 730 describing the written data blocks (e.g., vdisk ID 1, snapshot ID 1, logical offset range 0-1TB, data object IDs 1a-n) to the persistent log 740. After all of the data blocks are replicated and flushed to the object store 660, the frontend data service 710 constructs one or more index data structures 800 for the snapshot vdisk 550a (i.e., a parent B+ tree) using the appropriate snapshot metadata 730 for snapshot ID 1.

Assume that at the predetermined time interval, the CVM 300 generates a subsequent snapshot for the vdisk 235 (e.g., snapshot vdisk 550b) and after specifying snapshot 550a as a reference snapshot and performing the incremental computation, determines that the deltas (changes) of data blocks between the snapshot vdisks 550a,b lie in the offset range of 1MB-5MB and 1GB-2GB of the reference snapshot (e.g., snapshot vdisk 550a). Such deltas may be determined for a series of snapshots. For example, the CVM 300 may issue a second replication API call to the LTSS 700 that identifies the vdisk ID 1, a first snapshot vdisk 550b as, e.g., snapshot ID 2, and the logical offset range of 1MB-5MB for the changed data blocks. The CVM 300 then replicates the delta data blocks to the LTSS 700. In response to receiving the second replication API call, the frontend data service 710 buffers the changed data blocks to an optimal size (e.g., 16MB) and writes the blocks into a data object 640 assigned, e.g., an object ID 2. The frontend data service 710 also records snapshot metadata 730 describing the written data blocks (e.g., vdisk ID 1, snapshot ID 2, logical offset range 1MB-5MB, object ID 2) to the persistent log 740.

After all of the changed data blocks are replicated and flushed to the object store 660, the frontend data service 710 constructs an index data structure 800 for the first snapshot vdisk 550b using the appropriate snapshot metadata 730 for snapshot ID 2. Assume the changed data blocks at the logical offset range 1MB-5MB of the snapshot vdisk 550a fit within the data object (extent) referenced by a leaf node 830 of the parent B+ tree. A new, updated copy of the leaf node may be created to reflect the changed data blocks at the logical offset range while the remaining leaf nodes of the parent B+ tree remain undisturbed. Updated copies of the internal node(s) 820 referencing the logical offset range of the changed data blocks described by the updated leaf node may likewise be created. A new "cloned" B+ tree is thus constructed based on the parent B+ tree using a copy-on-write technique. The cloned B+ tree has a new root node 810a and internal nodes 820 that point partially to "old" leaf nodes 830 of the parent B+ tree as well as to the new leaf node 830a (not shown). Illustratively, the leaf node 830a is copied and then modified to reference the changed data. Effectively, the cloned B+ tree for the first Δ snapshot vdisk 550c is a "first child" B+ tree that shares internal and leaf nodes with the parent B+ tree.

The CVM 300 thereafter issues a third replication API call to the LTSS 700 that identifies the vdisk ID 1, a second Δ snapshot vdisk 550c as, e.g., snapshot ID 3, and the logical offset range of 1GB-2GB for the changed data blocks. The CVM 300 replicates the delta data blocks to the LTSS 700. In response to receiving the third replication API call, the frontend data service 710 buffers the changed data blocks to an optimal size (e.g., 16MB) and writes the blocks into "n" data objects 640 assigned, e.g., object IDs 3an (not shown). The frontend data service 710 records snapshot metadata 730 describing the written data blocks (e.g., vdisk ID 1, snapshot ID 3, logical offset range 1GB-2GB, object IDs 3a-n) to the persistent log 740. After all of the changed data blocks are replicated and flushed to the object store 660, the frontend data service 710 constructs one or more second child B+ trees for the second Δ snapshot vdisk, as described above. Notably, a large branch factor of the B+ tree permits a very large number of references in the internal nodes of the B+ tree to support a correspondingly large number of changes between snapshots so that the index structure depth of the tree may be maintained at a maximum depth (e.g., 2 to 3 levels) enabling rapid traversal time from the root node to a leaf node. That is, no matter how many snapshots exist, references to the oldest data remain referenced by the newest snapshot resulting in a fixed number of node traversals to locate any data.

Operationally, retrieval of data blocks (snapshot data) by the LTSS data services from any snapshot stored in the archival storage system involves fetching the root of the index (B+ tree) data structure 800 associated with the snapshot from the snapshot configuration repository 760, using the offset/range as a key to traverse the tree to the appropriate leaf node 830, which points to the location of the data blocks in the data object 640 of the object store 660. For incremental restoration of snapshot data, the technique further enables efficient computation of differences (deltas) between any two snapshots. In an embodiment, the LTSS data services perform the delta computations by accessing the snapshot configuration repository 760, identifying the root nodes 810 of the corresponding index data structures 800 (e.g., B+ trees) for the two snapshots, and traversing their internal nodes 820 all the way to the leaf nodes 830 of the index data structures to determine any commonality/overlap of values. All leaf nodes 830 that are common to the B+ trees are eliminated, leaving the non-intersecting leaf nodes corresponding to the snapshots. According to the technique, the leaf nodes of each tree are traversed to obtain a set of <logical offset, object ID, object offset> tuples and these tuples are compared to identify the different (delta) logical offset ranges between the two snapshots. These deltas are then accessed from the data objects and provided to a requesting client.

Previous deployments of index data structures employing B+ trees are generally directed to primary I/O streams associated with snapshots/clones of active file systems having changeable (mutable) data. In contrast, the technique described herein deploys the B+ tree as an index data structure 800 that cooperates with LTSS 700 for long-term storage of large quantities of typed snapshot data treated as immutable and, further, optimizes the construction of the B+ tree to provide efficiencies with respect to retrieval of data blocks contained in large quantities of long-term storage data objects 640. For example, the technique imposes transactional guarantees associated with a client-server model to facilitate construction of the index data structure 800 in local storage of LTSS 700 prior to transmission (flushing) to the object store 660. Upon initiation of a transaction to replicate snapshot data (e.g., snapshot vdisk 550a or Δ snapshot vdisk 550c), a client (e.g., CVM 300) may issue a start replication command that instructs a server (e.g., frontend data service 710 of LTSS 700) to organize the data as extents for storage into one or more data objects 640. Data blocks of the object 640 are flushed to the backend data service 750 for storage on the object store 660. Subsequently, the CVM 300 may issue a complete replication command to the frontend data service 710 which, in response, finalizes the snapshot by using information from snapshot metadata 730 to construct the index data structure 800 associated with the data object locally, e.g., in a fast storage tier of LTSS 700 and, in one or more embodiments, flushing the constructed index structure 800 to the backend data service for storage on the object store 660. Note that the transactional guarantees provided by the optimized technique allow termination of the replication and, accordingly, termination of construction of the index data structure prior to finalization.

In essence, the technique optimizes the use of an index data structure (e.g., B+ tree) for referencing data recorded in a transactional archival storage system (e.g., LTSS) that has frontend and backend data services configured to provide transactional guarantees that ensures finalization of snapshot replication only after the client (e.g., CVM) indicates completion of the transaction. Until issuance of the completion command, the replication (or backup) transaction can be terminated. This enables construction of a (cloned) index data structure for each replicated snapshot on high performance (fast) storage media of an LTSS storage tier that may be different from the storage media tier used for long-term storage of the index data structure 800 and data object 640. Note that active file system deployments of the B+ tree as an index data structure are constrained from applying such a transactional model to write operations (writes) issued by a client (e.g., user application) because those writes are immediately applied to the active file system (e.g., as "live" data) to support immediate access to the data and preserved in the B+ tree index structure unconditionally (i.e., writes in the index structure cannot be ignored or terminated as in transactional models). Moreover, conventional backup systems associated with active file systems also require that the writes of the snapshot data be immediately available for retrieval without delay to support immediate availability of restore operations. In contrast, the LTSS architecture is optimized for storing immutable typed snapshot data not shared with an active (mutable) file system and not live data for active file systems or conventional backup systems.

In other words, after the replication complete command, the metadata associated with the stream of snapshot data is processed to construct the index data structure (e.g., a B+ tree) at the frontend data service 710 and flushed to the backend data service 750 for storage in the object store 660. This optimization is advantageous because object stores are generally immutable repositories consisting of low-performance (slow) storage media that are not generally suited for constructing changing and frequently accessed data structures that require constant iteration and modification (mutation) during construction. The technique thus enables construction of the B+ tree index structure locally on a fast storage media tier of the LTSS 700 before flushing the completed index data structure 800 to the object store 660. The fast, local storage media used to persistently store the metadata and construct the index data structure may be SSD or HDD storage devices that are separate and apart from the storage devices used by the object store 660.

The LTSS 700 is thus agnostic as to the file system (client) delivering the data and its organization, as well as to the object store storing the data. By implementing a transactional model for data replication by the data services of LTSS 700, the technique further enables deferred construction of a (cloned) index data structure 800 locally on fast storage media (e.g., on-prem) upon transaction completion (e.g., a backup commit command), and subsequent flushing of a completed index data structure to the remote object store 660 of LTSS (e.g., in-cloud). Deferral of construction of the index data structure enables fast intake (i.e., reception) of the replicated snapshot data in a log-structured (e.g., sequential order) format while the snapshot metadata is recorded in the persistent log by the frontend data service. The data services of LTSS 700 perform optimal organization and packing of the data as extents into data objects 640 as defined by the object store vendor/CSP. Notably, the technique described herein facilitates efficient storage and retrieval of the data objects using an indexing data structure 800 that is optimized to accommodate very large quantities of snapshots (e.g., many thousand over a period of years), while managing metadata overhead that grows linearly with the increase of data changes and not with the number of snapshots.

For pure archival storage, a log-structured approach may be preferred because primarily writes (only occasionally reads) are performed to storage. Yet for archival storage where data is frequently retrieved, e.g., for compliance purposes in medical and SEC regulation deployments, a B+ tree structure may be preferred. This latter approach is particularly attractive when the B+ tree is optimized to handle frequent "read-heavy" and "write-heavy" workloads. As described herein, the technique balances the trade-off such that the cost of creating the index structure is realized later, i.e., not in the context of incoming I/O writes, by deferring work from the critical path/time so as to avoid adding latency that typically occurs creating pure B+ tree structures. Therefore, the technique also provides an efficient indexing arrangement that leverages a write-heavy feature of the log-structured format to increase write throughput to the LTSS 700 for snapshot data replication to the object store 660 with a read-heavy feature of the index (e.g., B+ tree) data structure 800 to improve read latency (i.e., bounded time to locate data independent of the number of snapshots) by the LTSS 700 for snapshot data retrieval from the object store 660.

Illustratively, the indexing technique is optimized to support extended-length block chains of snapshots (i.e., "infinite-depth" snapshot chains) for long-term storage in the object store of the archival storage system. A problem with such deep snapshot chains is that a typical search for a selected data block of a snapshot requires traversing the entire snapshot chain until the block is located. The indexing technique obviates such snapshot chain traversal by providing an index data structure 800 (e.g., B+ tree) that is cloned for each snapshot (e.g., snapshot disk 550a,b) of a logical entity (e.g., vdisk 235) using copy-on-write that enables sharing references to data blocks with other cloned index data structures, as described herein. As also noted, the technique only requires traversing the depth of a (cloned) index data structure to find the leaf node pointing to a selected data block of a particular snapshot.

As described herein, snapshots that are stored and retrieved from an object store may use a long-term storage service, such as LTSS, that provides storage of large numbers (amounts) of snapshots on the object store. As described above, a LTSS service assumes exclusive control over snapshot-related metadata (including index data structures configured to provide efficient retrieval of data from the large number of snapshots) in the object store. However, if multiple LTSS services (running in different parts of the world) would access the same set of snapshots without specific communicated synchronization (e.g., locking protocol) data corruption may occur since each service instance would assume control over snapshot data/metadata. For example, an LTSS service may garbage collect a snapshot while it is being accessed by another LTSS service.

The embodiments described herein are directed to a technique configured to allow instantiation (spinning up/deploying) and running (execution) of long-term snapshot storage services (e.g., LTSS) of an archival storage system on demand and at various geographical locations (throughout the world). The instantiated LTSS instances are configured to provide storage and retrieval of large numbers (amounts) of point-in-time images or snapshots (e.g., recovery points) of application workloads stored as objects on one or more buckets of a shared object store (e.g., of the archival storage system). According to the technique, the LTSS instances may contemporaneously serve (access) snapshots of a same set of buckets on the shared object store without interfering with (tripping over) each other in a contention-free manner (i.e., without specific communicated synchronization between the storage service instances). That is, the technique enables LTSS instances that are associated with (configured to access) snapshot workload data and/or metadata stored, e.g., as objects of a recovery point, on the same set of buckets to coexist without knowledge of (or need to communicate with) each other. The LTSS instances can be created and destroyed on-demand by splitting and merging existing instances.

### LTSS Instance Identification

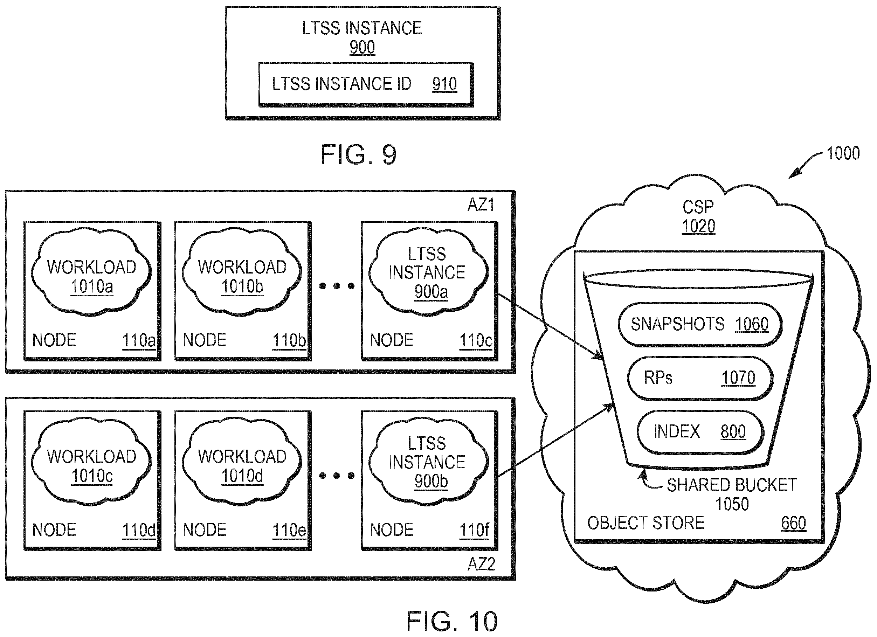

In an embodiment, the LTSS instances may be configured to execute on one or more computer nodes (on-premises or in cloud) to serve snapshots of recovery points (RPs) stored on the object store, which may be part of cloud storage 166. Fig. 9 is a block diagram of an embodiment of the LTSS as a LTSS instance 900 of the archival storage system. Every LTSS instance 900 has an identifier (ID) which is illustratively a universally unique ID (UUID). Each LTSS instance 900 that creates (or owns) a snapshot object (snapshot) also stamps (records metadata storing the instance ID associated with the object) the snapshot with the LTSS instance ID 910. An aspect of the technique is directed to a multi-instance LTSS (MLTSS) deployment that synchronizes operations of multiple LTSS instances through the object store without knowledge of or communication (such as a distributed communication or locking protocol) among the LTSS instances. Notably, if an LTSS instance is destroyed and a new LTSS instance is created from the state of the object store, then the new LTSS instance may use the same UUID used by the destroyed LTSS instance. However, the technique may allow changing the LTSS instance ID, e.g., when rebuilding an LTSS instance. The LTSS ID may be stored either in the object store or local database. Illustratively, the LTSS instance ID is stored in RP metadata and disk configuration objects of the object store.

In an embodiment, objects configured to store snapshot data and snapshot metadata are classified into two categories: exclusively owned (snapshots) objects and shared objects. Exclusively owned objects include metadata objects (e.g., index data structures) configured to store metadata created by an LTSS instance. Illustratively, the metadata objects include (i) RP metadata, (ii) disk configuration associated with disks of the RP, (iii) transient states of RPs and associated disks, and (iv) internal nodes of index data structures. As indicated above, each metadata object is stamped with an ID 910 of the creating LTSS instance 900 as the exclusive owner of the object. The LTSS instance ID 910 may be stored in a separate field in the RP metadata or inside vendor specific metadata. Although lifecycle management of these objects is performed by the LTSS owner instances, other LTSS instances may be able to modify the objects under certain circumstances, e,g,. if a disk (snapshot) is deleted then its index GC (by the LTSS owner instance) may modify a parent link of a child snapshot to its own parent snapshot even though the child snapshot may be owned by another LTSS instance. That is, during GC of a snapshot, the child snapshot may be "re-parented", e.g., the parent link of the child snapshot may be updated to reference (point to) the parent snapshot of the snapshot being deleted. Another circumstance may be where an LTSS instance is allowed to take a lock on a RP which it does not own. For example, to restore a snapshot from an RP, the LTSS instance may take a lock on the snapshot to prevent it's deletion (or GC), even though it is not the owner. In such a case, the owner LTSS owner instance is not able to delete the RP unless the lock is released.

Shared objects are inherently non-exclusive and include data objects and leaf nodes of index data structure that are shared between a plurality of snapshots, e.g., in a snapshot chain or shared across different disks. As such, these shared objects may be deleted/garbage collected by a GC cycle performed by an LTSS instance of the last snapshot owning them, which may be different from the LTSS instance that created the objects. Notably, LTSS instances that create data objects (or other shared objects) do not stamp the objects with its owner ID and the lifecycle of these objects may be managed from various LTSS instances without synchronization.

Although snapshots can be accessed and read by any LTSS instance 900 (since they are stored on shared buckets of a shared object store), the ability to manage a lifecycle (e.g., to perform garbage collection) of each snapshot lies with a respective LTSS owner instance, which allows scaling of garbage collection (GC) by distributing the overall GC load to various instances. That is, only a single LTSS instance has ownership (i.e., modification permission) of exclusive objects such as snapshot-related metadata, e.g., index data structures for providing efficient retrieval of data from the large number of snapshots, needed for garbage collection for one or more of the shared objects. In this manner many LTSS instances may read access information of the shared buckets (e.g., retrieve snapshot data using the indexes), but only one LTSS instance at a time (the owner) may modify the metadata (e.g., index data structures), such as during garbage collection or other administrative functions. In essence, the technique is a multi-reader/single writer deployment using an ownership identifier associated with each shared bucket of a storage object to guarantee atomic ownership and guard against corruption.

Fig. 10 is a block diagram illustrating an exemplary MLTSS deployment with shared buckets 1050 between availability zones (AZs). As used herein, an availability zone is a logical boundary for a group of managed (computer) nodes 110a-d deployed in one or more geographical locations. Assume a workload 1010a-d runs (is processed) on nodes 110a-d of a primary site (AZ1) in an on-premises cluster or hybrid cloud environment and a portion of the workload 1010 is moved to a secondary site (AZ2). Assume also that snapshots of RPs are generated and used during processing of the workload at AZ1 and AZ2 to back up the workload 1010 to the shared object store 660, e.g., at CSP 1020. The MLTSS deployment 1000 may be advantageously used to create an LTSS instance 900a,b at each AZ1 and AZ2 site where the workload 1010a-d runs to efficiently generate the snapshots used for back up to the object store 660 with the objective to serve data regardless of where the workload runs. The MLTSS deployment 1000 of LTSS instances in AZ1 and AZ2 advantageously provide local, on-premises LTSS instances 900a,b that can share data (snapshots 1060 and/or RPs 1070) through the shared bucket 1050 of the object store 660. These LTSS instances 900a,b also maintain indexes (B+ tree index data structures 800) to manage the snapshots 1060 or RPs 1070; the MLTSS deployment 1000 allows the LTSS instances 900 to share the indexes 800. Notably, LTSS instance ownership of objects is at a snapshot/RP granularity. For example, one of the instances, primary LTSS 900a, has ownership of the snapshots and RPs it creates while the other instance, secondary LTSS instance 900b, has ownership of the snapshots and RPs it creates. Each LTSS instance has the ability to modify metadata information such as performing garbage collection and administrative functions of their owned snapshots and RPs. However, each LTSS instance can also read information of any objects, such as the snapshots, RPs or index information needed to access specific data.

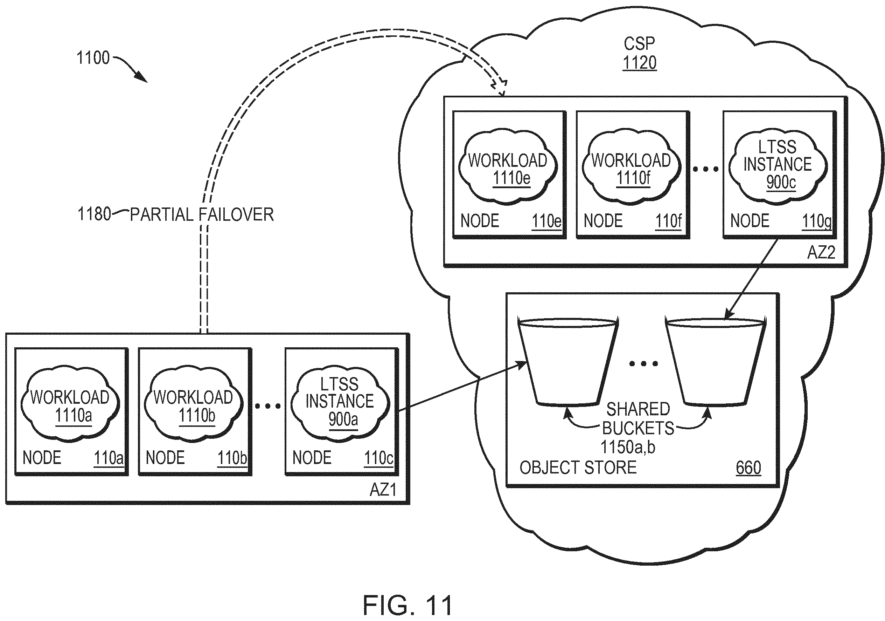

Fig. 11 is a block diagram illustrating another exemplary MLTSS deployment involving relocation of a portion of a workload during a partial failover. Restoring large amounts of snapshot data stored on shared buckets 1150a,b in the object store 660 of CSP 1120 during failover from an on-premises cluster (AZ1) to a cloud cluster (AZ2) may take a substantially long period of time. In an aspect of the technique, the MLTSS deployment 1100 may involve a hybrid cloud environment that instantiates (spins up/ deploys) an LTSS instance 900c in the cloud cluster AZ2 and seeds (fills) the data to the shared buckets 1150a,b accessible to cloud cluster AZ2 to minimize downtime during the failover. In effect, a duplicate or clone bucket 1150b is deployed as a copy (e.g., a live synchronous replica) of bucket 1150a for the workload/snapshots associated with failed-over workloads. Any snapshot replicated by LTSS instance 900a to bucket 1150a becomes immediately available in bucket 1150b to be accessible by LTSS instance 900c (and vice versa). Essentially, buckets 1150a and 1150b appear (function) as one logical image.

Assume that a workload 1110a-b (e.g., a plurality of virtual machines) is initially processed entirely on-premises AZ1 and as a result of a partial failover 1180, a portion of the workload 1110 (e.g., a portion of the virtual machines) is relocated to the cloud cluster AZ2. The LTSS instance 900c is deployed in the cloud cluster AZ2 of CSP 1120 to serve the data of the workload 1110e,f, generate snapshot objects (snapshots), and perform GC in parallel. That is, a clone bucket 1150b is deployed with a corresponding LTSS instance 900c so that failover workloads 1110e,f may continue independently from their original instances, e.g., storing replicas of the snapshots and RPs of bucket 1150a in cloned bucket 1150b. Notably, each LTSS instance 900a,c performs GC for its portion of workload/snapshots, i.e., snapshots owned by the respective LTSS instance 900a,c. That is, respective snapshots and RPs stored in each shared bucket 1150a,b are owned by respective LTSS instances 900a,c with control of metadata so as to perform GC and administrative functions. Since all objects are replicated between the buckets 1150a,b, any changes to one are automatically reflected in the other. For example, a GC performed by an owner LTSS instance to delete a snapshot S1 in bucket 1150a automatically deletes that snapshot S1 in bucket 1150b. In this manner, GC may be scaled for existing workloads by increasing LTSS instances (along with cloned shared buckets) so that more parallel GC occurs (i.e., each LTSS instance 900a,c performs GC on its owned respective snapshots and RPs in bucket 1150a,b). Notably, the technique ensures that the LTSS instances 900a,c do not interfere with proper operation of each other with respect to their serving of workload data and snapshots by, e.g., garbage collecting a snapshot to which another LTSS instance may hold a reference. The reverse may also be performed where buckets are merged and LTSS instances are reduced.

Assume further that the failover event lasts only for a short period of time (e.g., a day) with the portion of the workload 1110e,f running on the cloud cluster AZ2 until completion, e.g., to satisfy business requirements. The LTSS instance 900c in the cloud cluster AZ2 may then be merged (back) with the LTSS instance 900a on-premises AZ1 to form a single on-premises LTSS instance 900. Accordingly, the technique provides the ability to split an LTSS instance 900 into one or more other instances and also merge (combine) two or more LTSS instances 900a,c into a single LTSS instance 900 by synchronizing their operations through the shared object store 660. That is, the LTSS instances do not need to know of each other nor communicate with each other (i.e., they work independently) and synchronization of their operations (e.g., such as serving data and garbage collecting snapshots in parallel) occur using service state information (e.g., of the metadata) stored in the object store 660.

In addition to sharing data during the partial failover, there may be a situation where the relocated (moved) workload is not related to the non-moved workload and no sharing of data between the LTSS instances is needed. The technique described herein applies accordingly because the LTSS instances 900 are "stateless," i.e., the LTSS instances retain no state themselves so that they can be destroyed and instantiated (recreated) using the object store 660, which maintains all necessary snapshot/RP metadata (service state) and workload processing state associated with the instances. As used herein, a full rebuild of a destroyed (failed) LTSS instance involves recovery of the complete service and workload processing state associated with the failed LTSS instance from the object store. In this case, since the workloads are not related, the technique allows for partial rebuild of the workload by focusing only on the portion of the workload processed by the failed LTSS instance. That is, only the workload associated with the LTSS instance processing the portion of the failed workloads needs to be rebuilt.

Employing stateless LTSS instances in a hybrid multi-cloud environment advantageously facilitates (i) LTSS instance operation closer to a workload to obviate unnecessary data movement, (ii) on-demand destruction of an LTSS instance for replication environments with long Recovery Point Objectives (RPO), e.g., 4 hours or a day, after replicating a latest snapshot and re-instantiation of the instance in accordance with a next scheduled snapshot replication; and (iii) running an LTSS instance on-demand, e.g., to reduce cost in an MMST deployment.

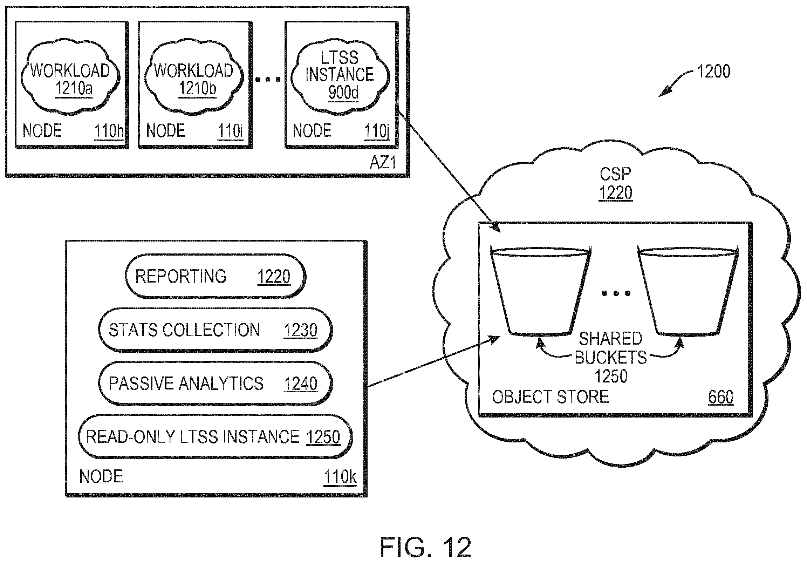

Fig. 12 is a block diagram illustrating yet another exemplary MLTSS deployment where an LTSS instance may be instantiated for read-only purposes, e.g., to handle applications such as passive analytics 1240, stats collection 1230, and application reporting 1220. For this deployment, the LTSS instance 900 may be instantiated with read-only privileges (e.g., a reader-only LTSS instance 1250) for all associated buckets. If necessary, other LTSS instances may be instantiated with read-write privileges for some buckets and read-only for other buckets or other combinations. For example, there may be one LTSS "writer" instance and multiple LTSS "reader" instances for applications configured to execute application reporting 1220, stats collection 1230 and/or passive analytics 1240 operations associated with workloads 1210a,b. One or more of the read-only LTSS instances 1250 may be instantiated (spun up/deployed) to perform the passive operations, e.g., in the background of workload processing executed by an LTSS writer (read-write) instance 900d. The read-only LTSS reader instance 1250 may be created on-demand and, once the background processing is completed, destroyed (shut down) at any time.

### MLTSS Strict Consistency and Synchronization

The technique described herein maintains strictly consistent RPs based on applied rules including: (i) when a RP is marked for deletion or is deleted by a LTSS instance, other LTSS instances should not hold a reference on such a deleted RP (i.e.,., other LTSS instances should not choose the deleted RP as a reference to perform delta replications); (ii) RP finalization from an LTSS instance should immediately allow reading data of the RP from another LTSS instance; (iii) GC is an exclusive operation modifying metadata during which no other LTSS instance should access the same RP; and (iv) LTSS instances should be able to perform GC on non-conflicting RPs (i.e., RPs having no interdependencies).

In an embodiment, synchronization among the LTSS instances may be achieved through the use of a "strictly consistent" shared object store such as, e.g., AWS S3, Azure blob and Nutanix Objects. That is, the object store 660 may be used to synchronize multiple LTSS instances 900 without the instances cooperatively communicating with each other, e.g., via a protocol. As noted, each LTSS instance 900 is configured to store a large number of RPs having immutable data (e.g., data objects). However, LTSS instances may update RPs, disk configurations, and other metadata constructs multiple times during their lifecycles. To that end, the LTSS instance metadata stored in the shared object store is illustratively strictly consistent so that changes to metadata are visible to LTSS instances in the order in which they occur to ensure consistency for concurrent access. As such, any read-after-write operations are visible to all LTSS readers after write or update operations are acknowledged at the object store. When multiple LTSS instances operate on a same bucket in the object store, changes made by an LTSS instance are visible to other instances to achieve a desired synchronization and concurrency (i.e., multiple readers) of accessing data from the object store. Referring to Fig. 10, for example, changes made by an LTSS instance 900a to metadata of a RP 1070 in a shared bucket 1050 of the object store 660 are made visible to other LTSS instances 900b in the order in which they occur to ensure synchronization and concurrency when accessing the RP 1070.

A client may connect to an LTSS instance 900 that owns all RPs created by the LTSS instance. According to the technique, a globally unique identifier (UUID) is assigned for each RP and associated snapshot (as well as any other construct, such as vdisk, storage target, and LTSS instance ID, that is used in an MLTSS deployment) to identify the LTSS owner instance and facilitate synchronization and concurrency because each LTSS instance is unaware of each other and may access the same bucket in the object store to store and retrieve RPs. Each LTSS owner instance also is configured to maintain the lifecycle (e.g., GC and administrative functions) of the RPs it owns. Sharing of disk data (e.g., data objects) among LTSS instances may be achieved by using references on the disk (e.g., snapshot) owned among different LTSS instances. Note, however, there may be more than one LTSS instance using the same shared entities of the same set of buckets and, according to the technique, those instances work in a cooperative environment. An entity may be a top-level RP (including snapshots and/or objects), disk, or storage target. For example, when creating a recovery point *RP1*, LTSS instance *L1* stamps (marks) its own LTSS ID on *RP1* indicating that it (LTSS instance *L1*) is responsible for managing the lifecycle of that RP. Any other LTSS instance can still use the disk data (data objects) in *RP1* as a reference to replicate incremental data whenever possible.

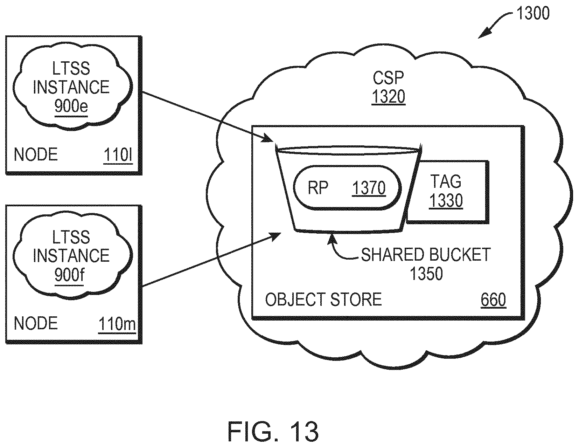

During administrative functions where metadata may be changed, such as during GC, an LTSS instance may require exclusive access to the recovery points it owns in the shared bucket. Fig. 13 is a block diagram illustrating an exemplary use of a tag associated with a recovery point (RP) to denote exclusive access in an MLTSS deployment. To avoid a situation where LTSS instance 900e may delete and garbage collect RP 1370 in shared bucket 1350 while another LTSS instance 900f is reading data from that RP 1370, the LTSS instance 900e may take a lock on RP 1370 using, e.g., a tag 1330, for the duration of the GC or administrative function. Administrative authority/privilege may be transferred from one LTSS instance to another, especially when an instance fails.

Similarly, assume the two different LTSS instances 900e,f attempt to perform operations to update a RP 1370, e.g., one LTSS instance 900e attempts to delete the RP 1370 while the other LTSS instance 900f attempts to establish and hold a lock on the RP 1370; use of tag 1330 may be advantageously employed to achieve such synchronization. For example, each LTSS instance first reads the RP 1370 in order to update the RP. If a tag 1330 is associated with the RP 1370, any update by the LTSS instance 900f is denied due to a tag mismatch, because the tag 1330 is associated with the ID of LTSS instance 900e (not instance 900f) indicating that RP 1370 is owned and modified by that LTSS instance. Synchronization and concurrency are then achieved by refreshing the RP1370 to finalize (render) the update.

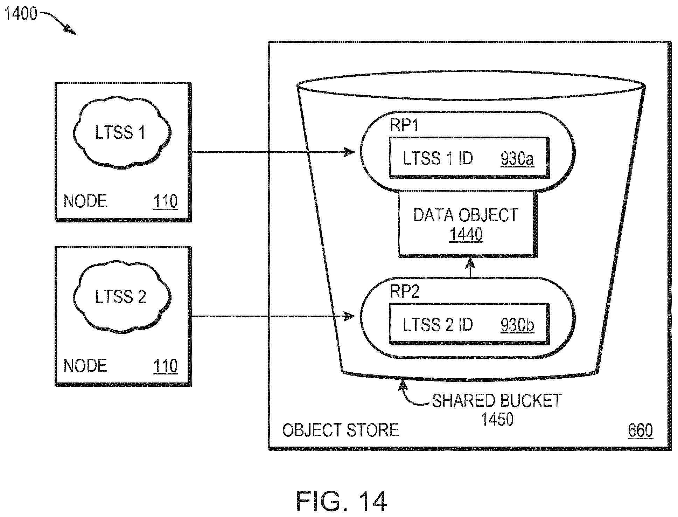

Fig. 14 is a block diagram illustrating an exemplary data object that is shared among RPs for which LTSS ownership is transferred. Assume an LTSS instance 1 (LTSS1) creates a recovery point 1 (RP1). LTSS1 stamps RP1 with its LTSS ID 930a and is thus the owner of RP1 for purposes of lifecycle management (e.g., GC and other administrative functions such as split or merger) of RP1. LTSS2 then creates RP2 and is the owner of RP2 (stamped with LTSS ID 930b). Assume further that LTSS2 is destroyed (shut down). Ownership of RP2 may be transferred from LTSS2 to LTSS1, which is then responsible for managing the lifecycles of both RP1 and RP2. Any other LTSS instance 900 can access the RPs in read-only mode (e.g., to share data object 1440 of RP1). Notably, an LTSS instance 900 may (i) create a RP, (ii) access the RP to read data or use as a reference, and (iii) lifecycle manage (e.g., GC) the RP. When creating the RP, the LTSS instance "stamps" the RP with its LTSS ID 930a indicating ownership/control of the RP. The LTSS ID stamp confers administrative privileges to modify metadata associated with the snapshots (e.g., GC the snapshot) but does not prevent read access by other LTSS instances of the snapshots of the RP, e.g., since the snapshots are immutable read-only entities. The stamp does, however, ensure that only the LTSS owner instance of the LTSS ID has administrative privileges to manage the lifecycle (GC) of the snapshots and RP1. Other LTSS instances may read and reference the snapshots, e.g., to restore and recover data using one or more other snapshots/RPs.

Advantageously, the technique described herein allows instantiation (creation) and/or destruction of an LTSS instance 900 on demand at any time and at any availability zone (at any geographical location). Moreover, an LTSS instance can be destroyed and dynamically created later at the same or different availability zone (AZ). For example, a primary workload served by one or more primary LTSS instances executing on an on-premises group of nodes (cluster) may run from different AZs that may be located in different geographical locations. The technique allows such disparate AZ instances to share snapshots using shared buckets stored in a common, shared object store 660 without further communication or synchronization (each shared object has a corresponding instance of the disparate AZ instances having ownership for managing GC). Similarly, if a portion of the workload is partially moved to a different AZ, a new secondary LTSS instance can continue serving the moved workload to archive snapshots to the shared object store. The two LTSS instances can continue sharing snapshots and leveraging each other's referenced snapshots for delta replication.

In addition, a remote LTSS instance may be created (spun up/deployed) in a remote location (disaster recovery site) and its snapshot workload may be filled (hydrated) to a nearer (geographically closer) object store in anticipation of a failover to that site. This aspect of the technique reduces the recovery time objective (RTO) by providing "on-demand speedy recovery" with a ready-made snapshot store available at the remote disaster recovery (DR) site. Such on-demand recovery reduces latency and improves throughput and RTO by moving an archival solution closer (geographically nearer) to the workload.

Furthermore, dynamically created LTSS instances may include read-write privileges (e.g., for regular replication snapshot targets) or read-only privileges (e.g., for snapshots readers). As for the latter, there are many use cases such as, e.g., reporting, stats collection, and passive analytics of LTSS instances that require just read-only privileges. Here, read-only LTSS instances 1250 can be deployed dynamically as needed since they do not have ownership of the shared object (for GC) and only access object data or related information (e.g., diagnostics, analytics, stats collection and the like) using reads.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software encoded on a tangible (non-transitory) computer-readable medium (e.g., disks and/or electronic memory) having program instructions executing on a computer, hardware, firmware, or a combination thereof. Accordingly, this description is to be taken only by way of example and not to otherwise limit the scope of the embodiments herein. Therefore, it is the object of the appended claims to cover all such variations and modifications as come within the true spirit and scope of the embodiments herein.

## Claims

1. A computer-implemented method comprising:
generating a snapshot object configured to store snapshot metadata of a workload at a primary snapshot storage service instance executing on a first computer node;
marking the snapshot object with an identifier (instance ID) of the primary snapshot storage service instance (first instance ID), wherein the first instance ID indicates an exclusive privilege to perform lifecycle management of the snapshot object by the primary snapshot storage service instance;
storing the snapshot object on an object store;
instantiating an instance of a secondary snapshot storage service having a second instance ID and executing on a second computer node;
accessing the instance ID of the snapshot object by the secondary snapshot service; and
in response to determining that the instance ID of the snapshot object is different from the second instance ID, limiting access at the object store by the secondary snapshot storage service instance to read the snapshot object without communicating with the primary snapshot storage service.

2. The computer-implemented method of claim 1, wherein marking the snapshot object comprises recording metadata associated with the snapshot object storing the instance ID associated with the snapshot object.

3. The computer-implemented method of claim 1 or 2, wherein the lifecycle management includes garbage collection.

4. The computer-implemented method of claim 1, 2 or 3, wherein the snapshot storage service instances are created and destroyed on-demand.

5. The computer-implemented method according to any of claims 1-4, further comprising:
merging the primary snapshot storage service instance into the secondary snapshot storage service instance; and
re-marking snapshot objects owned by the primary snapshot storage service instance with the second instance ID of the secondary snapshot storage service instance, such that the secondary snapshot storage service instance has ownership of the snapshot objects of the primary snapshot storage service instance.

6. The computer-implemented method according to any of claims of claim 1-4, further comprising:
storing the snapshot object in one or more shared buckets among snapshot storage service instances; and
accessing the snapshot object by each snapshot storage service instance in a contention-free manner.

7. The computer-implemented method according to any of claims 1-4, wherein the snapshot object is associated with a metadata object and one or more leaf node objects, and wherein the metadata object is exclusively owned by the first snapshot storage service instance and the leaf node objects are shared among the storage service instances.

8. A non-transitory computer readable medium including program instructions for execution on a processor of a node, the program instructions configured to:
generate a snapshot object configured to store snapshot metadata of a workload at a primary snapshot storage service instance executing on a first computer node;
mark the snapshot object with an identifier (instance ID) of the primary snapshot storage service instance (first instance ID), wherein the first instance ID indicates an exclusive privilege to perform lifecycle management of the snapshot object by the primary snapshot storage service instance;
store the snapshot object on an object store;
instantiate an instance of a secondary snapshot storage service having a second instance ID and executing on a second computer node;
access the instance ID of the snapshot object by the secondary snapshot service; and
in response to determining that the instance ID of the snapshot object is different from the second instance ID, limiting access at the object store by the secondary snapshot storage service instance to read the snapshot object without communicating with the primary snapshot storage service.

9. The non-transitory computer readable medium of claim 8, wherein the program instructions configured to mark the snapshot object are further configured to record metadata associated with the snapshot object storing the instance ID associated with the snapshot object.

10. The non-transitory computer readable medium of claim 8 or 9, wherein the lifecycle management includes garbage collection.

11. The non-transitory computer readable medium of claim 8, 9 or 10, wherein the snapshot storage service instances are created and destroyed on-demand.

12. The non-transitory computer readable medium according to any of claims 8-11, wherein the program instructions are further configured to:
merge the primary snapshot storage service instance into the secondary snapshot storage service instance; and
re-mark snapshot objects owned by the primary snapshot storage service instance with the second instance ID of the secondary snapshot storage service instance, such that the secondary snapshot storage service instance has ownership of the snapshot objects of the primary snapshot storage service instance.

13. The non-transitory computer readable medium according to any of claims 8-11, wherein the program instructions are further configured to:
store the snapshot object in one or more shared buckets among snapshot storage service instances; and
access the snapshot object by each snapshot storage service instance in a contention-free manner.

14. The non-transitory computer readable medium according to any of claims 8-11, wherein the snapshot object is associated with a metadata object and one or more data or leaf node objects.

15. The non-transitory computer readable medium according to any of claims 8-10, wherein first the snapshot storage service instance is destroyed while executing in a first availability zone, and wherein the first snapshot storage service instance is recreated in a second availability zone geographically different from that of the first availability zone.
